# EUROPÄISCHE PATENTSCHRIFT

(11) **EP 0 739 130 B1**
(45) Veröffentlichungstag und Bekanntmachung des Hinweises auf die Patenterteilung: **31.05.2000**
(21) Anmeldenummer: 96104737.0
(22) Anmeldetag: 25.03.1996
(51) Int. Cl.: H04N 5/45

(54) **Verfahren und Schaltungsanordnung zur Bild-im-Bild-Einblendung**
Method and circuit for a picture in picture insertion
Procédé et circuit d'insertion d'image dans l'image

(30) Priorität: 21.04.1995 DE 19514715
(43) Veröffentlichungstag der Anmeldung: 23.10.1996
(73) Patentinhaber: SIEMENS AKTIENGESELLSCHAFT, 80333 München (DE)
(72) Erfinder: Scheffler, Günter, Dipl.-Ing., 80939 München (DE)

(56) Entgegenhaltungen:
- EP-A- 0 471 878
- DE-C- 4 231 308

## Beschreibung

Die Erfindung betrifft ein Verfahren zur Einblendung eines einzublendenden Bildes in ein Hauptbild mit den Merkmalen gemäß dem Oberbegriff des Patentanspruchs 1. Die Erfindung betrifft darüber hinaus eine Schaltungsanordnung zur Durchführung des Verfahrens.

Bekanntlich wird bei der Fernsehsignalübertragung eine Folge von Halbbildern mit Zeilensprung übertragen, bei der die Halbbilder abwechseln die Rasterlage α, β aufweisen. Zur Verdopplung der Zeilenfrequenz werden Verfahren angewandt, bei denen wiedergabeseitig doppelt so viele Halbbilder dargestellt werden wie eingangsseitig zugeführt werden. Hierzu wird beispielsweise die Wiedergaberasterfolge αβαβ durchgeführt, um sowohl Großflächenflimmern als auch Zeilenflimmern zu vermeiden. Darüber hinaus sind auf progressivem Wiedergaberaster α+β basierende Verfahren bekannt, bei denen die Raster α, β zeilenverkämmt im gleichen Bild dargestellt werden. Hierdurch wird eine gute Zeilenflimmerbefreiung erreicht. Letztgenannte Verfahren sind insbesondere für eine eingangsseitige Halbbildfrequenz von 60 Hz geeignet oder für nicht für Halbbildwiedergabe ausgelegte Bildschirme, wie LCD-Bildschirme. In diesem Zusammenhang ist die Erfindung zur Bild-im-Bild-Einblendung anwendbar.

Bei der Einblendung eines Kleinbildes in ein Hauptbild, das eines der obigen Wiedergaberaster αβαβ oder α+β aufweist, ergeben sich Probleme bei der Synchronisierung der im allgemeinen asynchron vorliegenden jeweiligen Bildsignale für das Klein- und das Hauptbild. Wenn nur zwei Halbbildspeicher für die Zwischenspeicherung des Kleinbildes vorgesehen sind, kann der Einlesevorgang an einem der Halbbildspeicher vom Auslesevorgang zur Einblendung des ausgelesenen Bildsignals in das Hauptbild überholt werden. Dies bedeutet, daß im ausgelesenen Halbbild zwei zu unterschiedlichen Bewegungsphasen gehörende Halbbildanteile vorliegen. Dies führt im dargestellten Bild zu einem Bildschnitt (Joint Line). Darüber hinaus ist es möglich, daß bei zwei aufeinanderfolgend dargestellten Halbbildern zumindest in einem Teil des Halbbildes ein Rücksprung in der Bewegungsphase vorliegt. Dies führt zu äußerst störenden Darstellungsartefakten.

In der europäischen Patentanmeldung EP-A-0 471 878 ist ein Verfahren zur Einblendung eines Kleinbildes in ein Hauptbild bei verdoppelter Wiedergabefrequenz beschrieben, bei dem zwei Halbbildspeicher für das Kleinbild vorgesehen sind. In einer Logikeinrichtung wird ein Entscheidungssignal erzeugt, das in Abhängigkeit von der Phasenlage der zugeführten Kleinbild- und Hauptbildeingangssignale zulässige Bildzeilen angibt, an denen das Kleinbild im Hauptbild eingeblendet werden kann, so daß eine Joint Line vermieden wird. Das Kleinbild kann bei dem beschriebenen Verfahren nicht in beliebiger Größe an beliebiger Stelle des Hauptbildes eingeblendet werden. Außerdem kann es vorkommen, daß ein erstes Halbbild A, das im α-Raster empfangen wird, im β-Raster und ein zweites Halbbild B, das im β-Raster empfangen wird, im α-Raster darzustellen ist. Es ist dann eine Rasterkorrektur notwendig, für die vorzugsweise eine Interpolation vorgeschlagen wird. Durch derartige Korrekturmaßnahmen wird jedoch die vertikale Auflösung der darzustellenden Bildinformation verringert.

Die Aufgabe der vorliegenden Erfindung ist es, ein Verfahren der eingangs genannten Art anzugeben, bei dem die vertikale Auflösung des einzublendenden Bildes möglichst wenig beeinträchtigt wird.

Erfindungsgemäß wird dies durch die im kennzeichnenden Teil des Patentanspruchs 1 angegebenen Verfahrensschritte erreicht.

Eine Schaltungsanordnung zur Durchführung des Verfahrens ist in den Ansprüchen 8 und 9 angegeben.

Beim erfindungsgemäßen Verfahren können Joint Lines bei der Wiedergabe bestehen bleiben. Beim Wiedergaberaster αβαβ sind prinzipiell höchstens zwei in verschiedenen Wiedergaberastern auftretende Joint Lines möglich. Bei progressivem Wiedergaberaster ist höchstens eine Joint Line möglich. Da keine vertikale Interpolation durchgeführt werden muß, bleibt die vertikale Bildauflösung des Kleinbildes im wesentlichen erhalten. Dabei wird die Darstellungsqualität erhöht. Dem liegt die Erkenntnis zugrunde, daß vom Betrachter eine Joint Line weniger störend empfunden wird als ein etwaiger vertikaler Auf lösungsverlust. Statt dessen wird im erfindungsgemäßen Verfahren eine Bewegungsphasenumsetzung durchgeführt, die die vertikale Auflösung im wesentlichen beibehält. Hierzu werden beispielsweise die Bildinhalte zeitversetzt vorliegender Halbbilder, die also verschiedenen horizontalen Bewegungsphasen angehören, ausgewertet. Dies erfolgt beispielsweise durch Verwendung eines Bewegungsvektors. Vorteilhafterweise wird eine Medianfilterung der in den beiden Halbbildspeichern vorliegenden Halbbilder durchgeführt.

Die Folge der in den wiedergabeseitigen Zeilenrastern darzustellenden Bewegungsphasen wird so gewählt, daß beim Wiedergaberaster αβαβ zwei gleiche Bewegungsphasen unmittelbar aufeinanderfolgend darzustellen sind und bei der progressiven Wiedergabe in einem Vollbild im Raster α+β nur die gleiche Bewegungsphase darzustellen ist. Die horizontale Bewegungsphase der aus den Halbbildspeichern ausgelesenen Bildteile wird ermittelt. Wenn eine Abweichung der Bewegungsphase des ausgelesenen Bildteils von der vorgegebenen darzustellenden Bewegungsphase vorliegt, wird eine Anpassung des Bildinhalts in bezug auf die Bewegungsphase wie oben beschrieben durchgeführt. Zur Erkennung einer Bewegungsphasenabweichung und zur Erzeugung eines entsprechenden Steuersignals zur Bewegungsphasenkorrektur kann eine Wertetabelle angewendet werden, durch die das Steuersignal in Abhängigkeit von der Phasenlage des einzublendenden Bildes zum Hauptbild, vom Wiedergabezeilenraster und von der relativen Lage des gerade ausgelesenen Bildteiles in bezug auf das einzublendende Bild angegeben wird.

Für die Festlegung der vorgegebenen Folge der wiedergabeseitigen Bewegungsphasen liegen unter Berücksichtigung der oben angegebenen Bedingungen verschiedene Möglichkeiten vor. Beim Wiedergaberaster αβαβ sind drei Möglichkeiten zur Festlegung einer Folge für jeden von einer Joint Line begrenzten Bildbereich denkbar. Vorzugsweise wird die Auswahl derart getroffen, daß die Bewegungsphasenabfolge in allen drei Bildbereichen gleich ist. Dies hat den Vorteil, daß die jeweilige Joint Line kaum sichtbar ist.

Das zur Bewegungsphasenumsetzung zweckmäßigerweise verwendete Medianfilter ist relativ einfach realisierbar. Bei einem Medianfilter wird aus einer Anzahl von (z. B. drei) Eingangswerten der amplitudenmittlere Wert ausgewählt. Es ist dabei keine Zwischenspeicherung einer Bewegungsinformation notwendig.

Nachfolgend wird die Erfindung anhand der in der Zeichnung daragestellten Figuren ausführlich erläutert. Es zeigen:
- Figur 1: ein Prinzipschaltbild einer Schaltungsanordnung zur Durchführung des erfindungsgemäßen Verfahrens,
- Figur 2: ein Lese- und Schreibzeigerdiagramm für die beiden Halbbildspeicher für das einzublendende Bild,
- Figur 3: eine Darstellung der in den Halbbildspeichern gespeicherten Bildinformation während mehrerer aufeinanderfolgender Wiedergaberaster mit einem sich von rechts nach links bewegendem Objekt,
- Figur 4: ein Lese- und Schreibzeigerdiagramm für progressive Wiedergabe und
- Figur 5: eine Darstellung des Inhalts der Halbbildspeicher bei progressiver Wiedergabe.

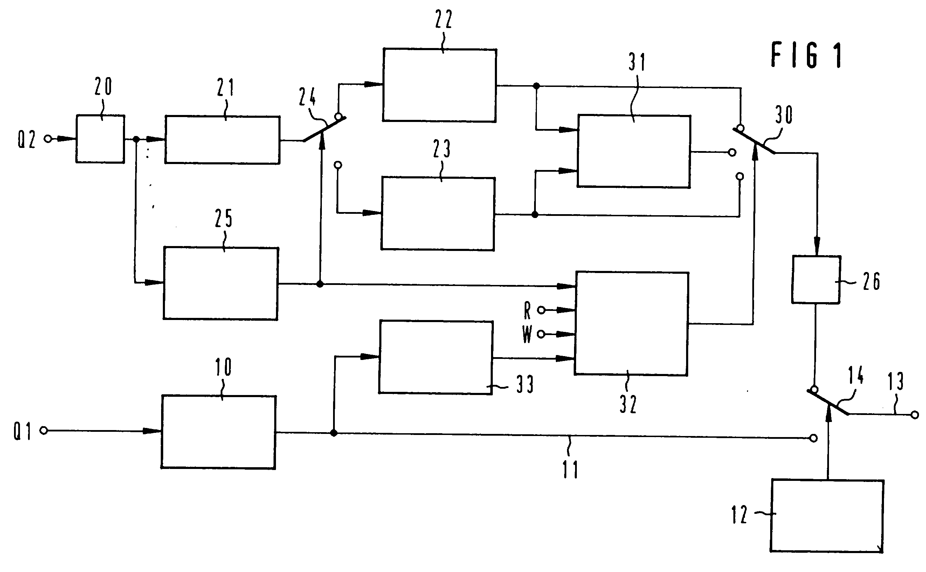

Die Schaltungsanordnung gemäß Figur 1 enthält im Signalverarbeitungskanal für das Hauptbild eine Einrichtung 10, der eingangseitig das Bildsignal für das Hauptbild Q1 zugeführt wird. Das Signal Q1 enthält zeilenverkämmte Halbbilder A1, B1, A2, B2, ..., die in einer Einrichtung 10 für eine Wiedergabe mit doppelter Zeilenfrequenz aufbereitet werden. Am Ausgang 11 der Einrichtung 10 liegt das Hauptbild mit der Wiedergaberasterfolge αβαβ oder dem progressiven Wiedergaberaster α+β vor. Die Einblendung eines Kleinbildes in das Hauptbild wird durch eine Einrichtung 12 gesteuert. Am Ausgang 13 der Schaltung liegt ein Bildsignal vor, das in herkömmlichen Display-Generator zur Ansteuerung einer Bildröhre eingespeist werden kann.

Ein Signal Q2 für das in das Hauptbildraster einzublendende Kleinbild wird zur weiteren Signalverarbeitung in einem Analog/Digital-Wandler 20 digital gewandelt. Das Bildsignal Q2 enthält ebenfalls zeilenverkämmte Halbbilder A1, B1, A2, B2, ..., die mit einfacher Zeilenfrequenz (50 Hz Halbildwiederholfrequenz) vorliegen. In einer Einrichtung 21 wird die einzublendende Bildfolge auf die einzublendende Bildgröße dezimiert. Die dezimierten Halbbilder werden in Halbbildspeichern 22, 23 zwischengespeichert. Für die ersten Halbbilder A1, A2, ... ist der Halbbildspeicher 22 vorgesehen, für die zweiten Halbbilder B1, B2, ... der Halbbildspeicher 23. Hierzu ist eine Einrichtung 25 zur Halbbilderkennung der Halbbilder des Signals Q2 vorgesehen, die einen Umschalter 24 zur Umschaltung zwischen den Halbbildspeichern 22, 23 steuert. Nach - noch näher zu beschreibender - Signalverarbeitung wird die aus den Halbbildspeichern 22, 23 ausgelesene Bildinformation mittels eines Digital/Analag-Wandlers 26 analog gewandelt und über die Einblendeinrichtung 14 unter Steuerung der Einblendsteuerungseinrichtung 12 in das Hauptbild eingeblendet.

Zur rasterrichtigen und bewegungsphasenrichtigen Einblendung ist eine Umschalteinrichtung 30 vorgesehen. Der Eingang des Umschalters ist verbindbar mit dem Ausgang des Halbbildspeichers 22, dem Ausgang des Halbbildspeichers 23 oder dem Ausgang einer Einrichtung 31 zur Bewegungsphasenumsetzung. Die Einrichtung 31 ist eingangsseitig mit den Ausgängen der Halbbildspeicher 22, 23 verbunden. Die Steuerung des Umschalters 30 wird von einer Logikeinrichtung 32 durchgeführt. Eingangsseitig werden der Logikeinrichtung 32 das von der Einrichtung 25 erzeugte Halbbildsignal für das Eingangsignal Q2 zugeführt, die Leseadresse R und Schreibadresse W des Lese- bzw. Schreibvorgangs an den Halbbildspeichern 22, 23 und ein Signal, das das momentane Hauptbildraster α oder β angibt und das in einer Einrichtung zur Rastererkennung 33 erzeugt wird. Die Einrichtung 32 realisiert im wesentlichen eine Wertetabelle, durch die in Abhängigkeit von den der Einrichtung 32 zugeführten Eingangsignalen das Ausgangssignal zur Steuerung des Umschalters 30 erzeugt wird. Die Wertetabelle der Einrichtung 32 ist derart vorbestimmt, daß für alle möglichen Betriebszustände der Schalter 30 derart einstellbar ist, daß die Bewegungsphasen des einzublendenden Bildes keinen Rücksprung enthalten.

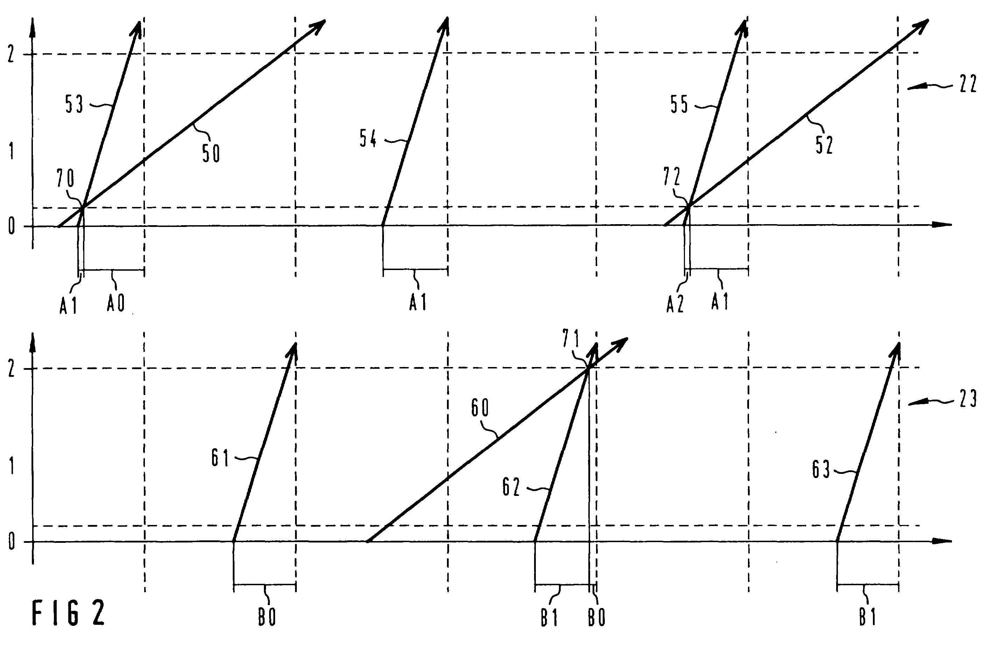

Für eine willkürlich gewählte Phasenlage der einzublendenden Bilder des Signals Q2 zum Hauptbildsignal Q1 sind in Figur 2 Lese- und Schreibvorgänge an den Halbbildspeichern 22 und 23 für eine bestimmte Zeitspanne für das Raster αβαβ dargestellt. In vertikale Richtung ist dabei die jeweilige Lese-/Schreibadresse abgetragen. Am Halbbildspeicher 22 wird mit dem Schreibzeiger 50 das Halbbild A1 eingeschrieben, wobei vorausgesetzt ist, daß das Halbbild A0 bereits gespeichert ist; mit dem Schreibzeiger 52 wird das Halbbild A2 eingeschrieben. Die Lesezeiger 53, 54, 55 stellen die Adreßzeiger der Auslesevorgänge dar. Entsprechendes gilt für den Halbbildspeicher 23, bei dem vorausgesetzt wird, daß das Halbbild B0 bereits gespeichert ist, während mit dem Schreibstrahl 60 das Halbbild B1 eingelesen wird. Mit den Auslesezeigern 61, 62, 63 wird jeweils am Halbbildspeicher 23 ein Auslesevorgang durchgeführt.

An der Stelle 70 liegt ein Überholvorgang von Einlesen und Auslesen am Halbbildspeicher 22 vor. Zuerst wird die neue Bildinformation des Halbbilds A1 ausgelesen, anschließend die Bildinformation des zeitfrüheren Halbbilds A0. Am Bildschirm werden also Bildteile von verschiedener Bewegungsphase dargestellt. Dem Betrachter erscheint dies als ein Bildschnitt (Joint Line). Nachfolgend wird durch Auslesen am Halbbildspeicher 23 das Halbbild B0 gemäß dem Auslesezeiger 61 ausgelesen. Anschließend wird am Halbbildspeicher 22 das Halbbild A1 ausgelesen (Zeiger 54). Bei den Zeigern 61, 54 liegt jeweils keine Joint Line vor. Beim nächsten Auslesevorgang (Zeiger 62) am Halbbildspeicher 23 liegt wiederum eine Joint Line 71 vor, wobei zuerst der Halbbildinhalt B1, dann der Halbbildinhalt B0 ausgelesen wird. Die Joint Line 71 ist von der Joint Line 70 verschieden. Beim nächsten Auslesevorgang 55 am Halbbildspeicher 22 liegt wiederum eine Joint Line 72 an der gleichen Stelle wie die Joint Line 70 vor. Die Folge der eingeblendeten Bilder weist beim Übergang vom Auslesezeiger 53 zum Auslesezeiger 61 einen Rücksprung in der dargestellten Bewegungsphase auf, indem nach der Darstellung des Halbbildanteils A1 im gleichen Bildbereich das Halbbild B0 dargestellt wird. In gleicher Weise ergibt sich ein Rücksprung in der Bewegungsphase an der Joint Line 71, indem zuerst ein entsprechender Bildanteil vom Halbbild B0 darstellt wird, nachfolgend mit dem Auslesezeiger 55 im entsprechenden Bildbereich ein Anteil des Halbbilds A1. Ein weiterer Rücksprung in der Bewegungsphase liegt bei der Joint Line 72 vor, indem zuerst der Halbbildanteil vom Halbbild A2 dargestellt wird, dann mit dem Auslesezeiger 63 im entsprechenden Bildbereich ein Anteil des Halbbilds B1. Die Joint Lines 70, 71, 72 teilen demnach das Kleinbild in drei Bildbereiche auf.

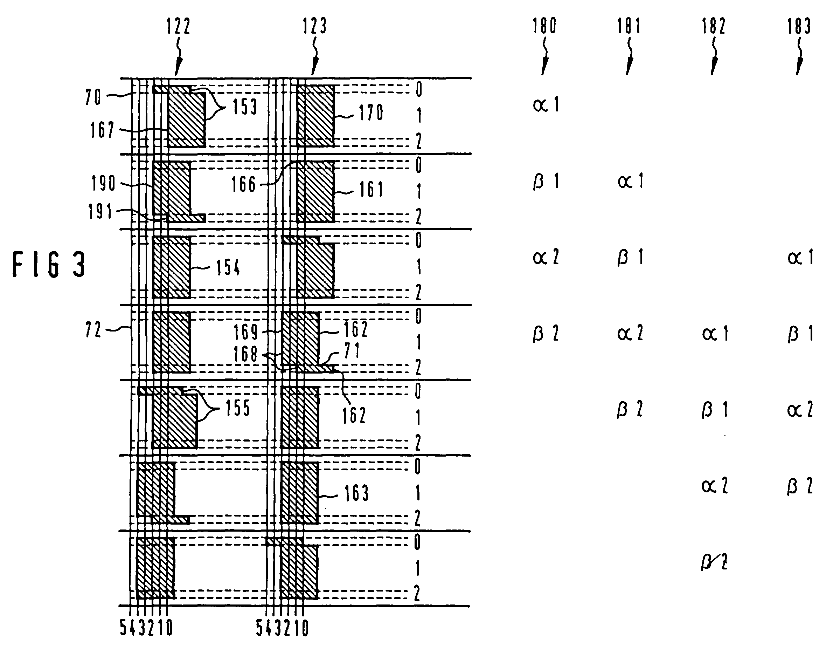

In Figur 3 ist der Inhalt der Bildspeicher 22, 23 für eine von rechts nach links bewegte dunkle Fläche dargestellt. Die einzelnen Bewegungsphasen sind mit 0, 1, 2, ..., 5 gekennzeichnet. Die rechts dargestellten Bildinhalte 123 stellen den Speicherinhalt des Halbbildspeichers 23 dar, die links dargestellten Bildinhalte 122 den Inhalt des Halbbildspeichers 22. Der Bildinhalt 153 zeigt denjenigen Bildinhalt, der durch den Auslesezeiger 53 ausgelesen wird. Durch die Joint Line 70 wird der Bildinhalt des Halbbildanteils A1 vom Halbbildanteil A0 getrennt. Während der Halbbildanteil A1 der Bewegungsphase 2 zuordenbar ist, ist der Halbbildanteil A0 der Bewegungsphase 0 zuordenbar. Der Bildinhalt 161 entspricht dem Auslesezeiger 61, der Bildinhalt 154 dem Auslesezeiger 54. Die nächste Joint Line 71 liegt beim Bildinhalt 162 vor, der mit dem Lesezeiger 62 ausgelesen wird. Durch die Joint Line 71 wird die Bewegungsphase 1 von der Bewegungsphase 3 getrennt. Maximal können 2 Joint Lines vorliegen, die jeweils in verschiedenen Halbbildern auftreten. Die Joint Lines teilen das dargestellte Bild in drei Bildbereiche 0, 1, 2 auf. Der Rücksprung in der Bewegungsphase bei der Darstellung der Bildinhalte beim Übergang vom Halbbild A1 auf das Halbbild B0 sorgt für einen äußerst störenden Bewegungsartefakt.

Um dies zu vermeiden, wird der Umschalter 30 durch die Steuerungseinrichtung 32 mit der Bewegungsphasenumsetzungseinrichtung 31 während des Auslesens des Bildbereichs 165 verbunden. Durch die Einrichtung 31 wird eine Bewegungsphasenumsetzung des Bildbereichs 165 derart durchgeführt, daß der Bildinhalt, der die Bewegungsphase 2 darstellt, auf die Bewegungsphase 1 umgesetzt wird. Auch beim Auslesen des Speicherinhalts 167 bleibt der Umschalter 30 mit dem Ausgang der Einrichtung 31 verbunden, um den Bildinhalt 167 von Bewegungsphase 0 auf Bewegungsphase 1 umzusetzen. Beim nachfolgenden Auslesen des Speichers 23 liegt bereits der Bildinhalt 161 in der Bewegungsphase 1 vor, so daß kein Bewegungsphasenrücksprung erfolgt. Der Speicherinhalt 154 liegt bereits in der Bewegungsphase 2 vor. Beim Auslesen des Bildinhalts 168 am Speicher 23 liegt wiederum ein Rücksprung von der Bewegungsphase 2 zur Bewegungsphase 1 vor. Durch die Steuerungseinrichtung 32 wird wiederum veranlaßt, daß eine Bewegungsphasenumsetzung des Bildinhalts 168 auf die Bewegungsphase 2 durchgeführt.

Außerdem bleibt auch während des Auslesens des Bildinhalts 169 die Einrichtung 31 aktiv, so daß der dort ausgelesene Bildinhalt, der der Phase 3 entspricht, auf die Phase 2 umgesetzt wird. Beim Auslesen des Speicherinhalts 155 wird ein neuer Zyklus der Rasterabfolge αβαβ begonnen. Entsprechend dem Auslesen des Speicherinhalts 153 wird wieder für den gesamten Speicherinhalt eine Bewegungsphasenumsetzung durchgeführt.

Zur Bewegungsphasenumsetzung eignet sich prinzipiell jedes bekannte Verfahren. Beispielsweise kann ein Bewegungsvektor berechnet werden und zur Verschiebung der Bildinhalte entsprechend der festgestellten Bewegung verwendet werden. Die Berechnung eines Bewegungsvektors erfordert jedoch einen hohen Rechen- und Speicheraufwand. Vorteilhafterweise wird die Phasenumsetzungseinrichtung 31 deshalb als Medianfilter ausgeführt. Diesem werden die Bildpunkte der beiden in den Halbbildspeichern 22, 23 gespeicherten Halbbilder gemeinsam zugeführt. Beispielsweise wird ein in der Bewegungsphase umgesetzter Bildpunkt während des Wiedergaberasters α1 aus zwei Bildpunkten des Speicherinhalts 153 und einem dazwischen liegenden Bildpunkt des Speicherinhalts 170 gebildet.

Bislang wurde das erfindungsgemäße Verfahren anhand der in den Figuren 2, 3 beispielhaft dargestellten Phasenbeziehung zwischen den Darstellungsrastern des Hauptbildes und dem einzublendenden Bildsignal beschrieben. Diese Phasenbeziehung ist dadurch gekennzeichnet, daß das Raster α1 der Wiedergaberasterfolge α1β1α2β2 mit dem Auslesen aus dem Halbbildspeicher 22 vorliegt, wobei am Halbbildspeicher 22 die Joint Line 70 im oberen Bildbereich vorliegt. Darüber hinaus sind drei weitere Phasenbeziehungen zwischen Darstellungsraster und einzublendendem Bildsignal möglich. Deren relative Lage zum jeweiligen in den Speichern 22, 23 gespeicherten Bildsignal ist in Figur 3 mit den Bezugszeichen 180...183 angegeben. Dabei wird vorausgesetzt, daß beim Raster α1 aus dem Halbbildspeicher 22 ausgelesen wird, beim Raster β1 aus dem Halbbildspeicher 23, beim Raster α2 aus dem Halbbildspeicher 22, beim Raster β2 aus dem Halbbildspeicher 23. Es liegen also vier mögliche Phasenbeziehungen 180...183 vor.

Liegt beispielsweise die mit 181 gekennzeichnete Phase vor, ist es zweckmäßig, beim Umsetzen des Bildinhalts 190, der die Bewegungsphase 2 darstellt, eine Umsetzung auf die Bewegungsphase 1 durchzuführen und beim Auslesen des Speicherinhaltes 191, der die Bewegungsphase 0 darstellt, eine Umsetzung ebenfalls auf die Bewegungsphase 1. Beim nachfolgenden Auslesen aus dem Speicher 23 für das Wiedergaberaster β1 ist für den gesamten Bildinhalt wiederum eine Bewegungsphasenumsetzung durchzuführen. Die durch die Joint Lines getrennten Bereiche 0, 1, 2 werden in der bisher beschriebenen Ausführung des Verfahrens in einem Kleinbild gemeinsam einer Filterung unterzogen. Dadurch wird der Realisierungsaufwand verringert. Da außerdem in jedem Halbbild unabhängig vom Bildbereich die gleiche Abfolge der Bewegungsphase dargestellt wird, wird die Erkennbarkeit der Joint Lines wesentlich verringert. Die jeweilige Umsetzung wird derart ausgeführt, daß eine Bewegungsphase zweimal hintereinander dargestellt wird. Dies bewirkt für das einzublendende Bild im wesentlichen eine Befreiung von Großflächenflimmern. Es ist darüber hinaus auch möglich, daß die einzelnen durch die Joint Lines begrenzten Bereiche 0, 1, 2 getrennt betrachtet werden, wobei für jeden einzelnen Bereich eine eigene Folge von Bewegungsphasen vorgegeben wird, und der jeweils ausgelesene Bildinhalt entsprechend an diese Bewegungsphasenfolge angepaßt wird. In diesem Fall wird eine Joint Line deutlicher erkennbar. Die nachfolgend dargestellte Tabelle 1 gibt die von der Steuerungseinrichtung 32 auszuführende Funktion wieder. Es ist dabei für jeden der durch die Joint Lines festgelegten Bereiche 0, 1, 2 der jeweilige Bildinhalt der Halbbildspeicher 22, 23 in bezug auf die jeweilige Bewegungsphase 0, 1, 2, 3, 4, 5 angegeben sowie die nach der Filterung sich ergebenden Bewegungsphasen. Es sind drei verschiedene Folgen von vorgegebenen Bewegungsphasen (Folge 1 1 ... 3) für jeden Bildbereich unterscheidbar. Es wird dabei vorausgesetzt, daß abwechselnd aus den Speichern 22, 23 ausgelesen wird, beginnend mit dem Halbbildspeicher 22. Die unterstrichenen Bewegungsphasen bedeuten, daß an dieser Stelle eine Bewegungsphasenumsetzung durch die Einrichtung 31 durchzuführen ist. Dabei wurden die verschiedenen Phasenlagen 0...3 zwischen Darstellungsraster und einzublendendem Bildsignal berücksichtigt. Die Folge 1 bei Phase 0 stellt dabei den oben in Zusammenhang mit den Figuren 2 und 3 beschriebenen Verfahrensablauf dar. In der Tabelle ist wiederum feststellbar, daß sich in diesem Spezialfall die Bearbeitung für die Bereiche 0, 1, 2 nicht unterscheidet, so daß die Joint Lines kaum noch erkennbar sind. Es wäre auch möglich, daß zur Einblendung im Raster α1 aus dem Speicher 23 ausgelesen wird usw. Zur rasterrichtigen Darstellung ist dann eine Verschiebung eines der darzustellenden Bilder um eine Zeile notwendig.

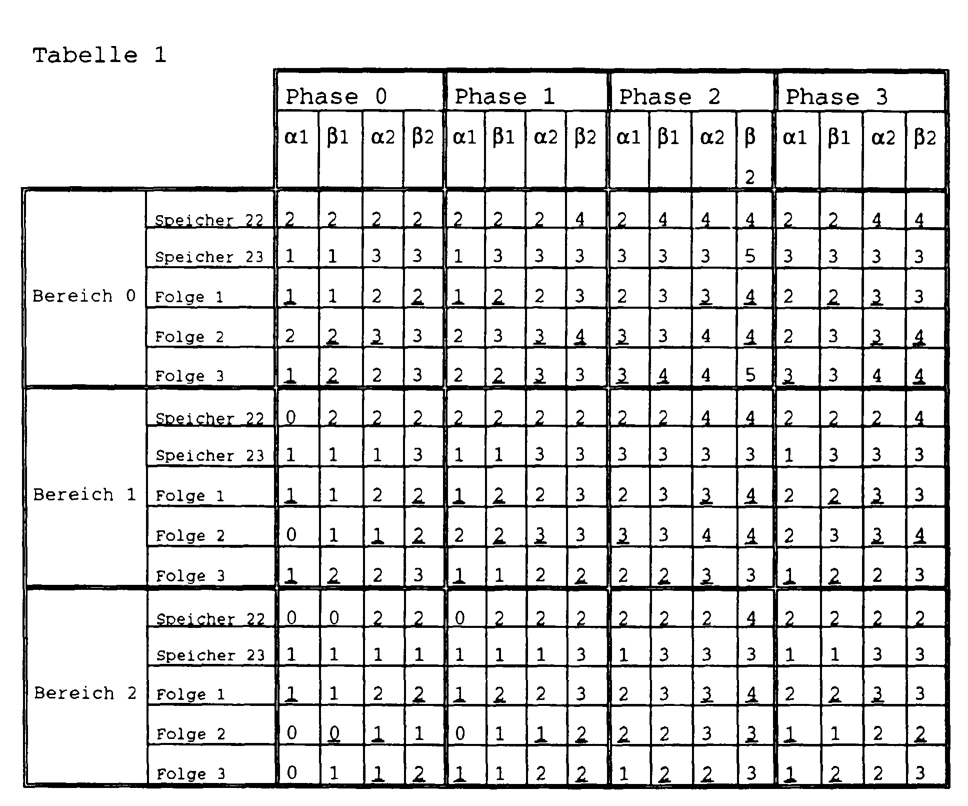

In der Einrichtung 32 kann die Feststellung, ob der Bereich 0, 1 oder 2 vorliegt, dadurch ausgeführt werden, daß Lese- und Schreibadresse R, W jeweils am gerade ausgelesenen Halbbildspeicher 22, 23 miteinander verglichen werden. Die Lage der Joint Lines muß zwischengespeichert werden. Sie sollte fortlaufend aktualisiert werden, damit Schwankungen der Phase zwischen Haupt- und Kleinbild erfaßt werden können. Zur Feststellung des jeweiligen Bereichs ist dann nur ein Vergleich der Ausleseadresse mit der gespeicherten Adresse notwendig. Die Information, welches der Raster α1, β1, α2, β2 vorliegt, wird von der Einrichtung 33 geliefert. Die Phasenlage 0...3 kann durch Abtastung des von der Einrichtung 25 gelieferten Halbbildsignals mit dem von der Einrichtung 33 gelieferten Rastersignal erfolgen. Das die Phase 0...3 angebende Signal ist ein 2 Bit-Signal, das beispielsweise aus zwei hintereinandergeschalteten Registern erhalten wird, von denen das zweite Register das 2 Bit-Signal abgibt. Das erste Register wird getaktet, wenn das Raster α1 beginnt, das zweite Register, wenn das Raster β1 beginnt. Dem ersten Register wird das von der Einrichtung 25 erzeugte Halbbildsignal zugeführt, dem zweiten Register das Ausgangssignal des ersten Register als MSB und das von der Einrichtung 25 erzeugte Halbbildsignal als LSB.

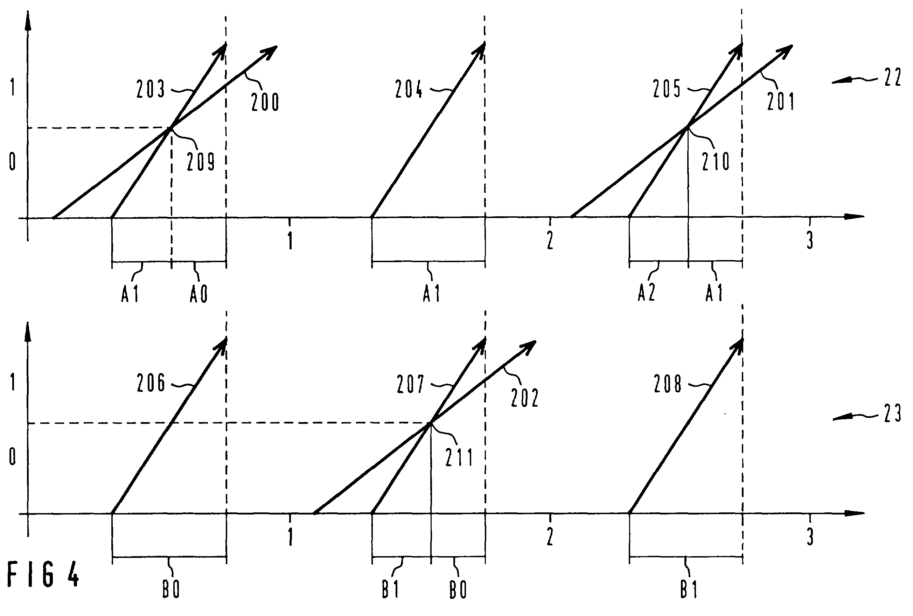

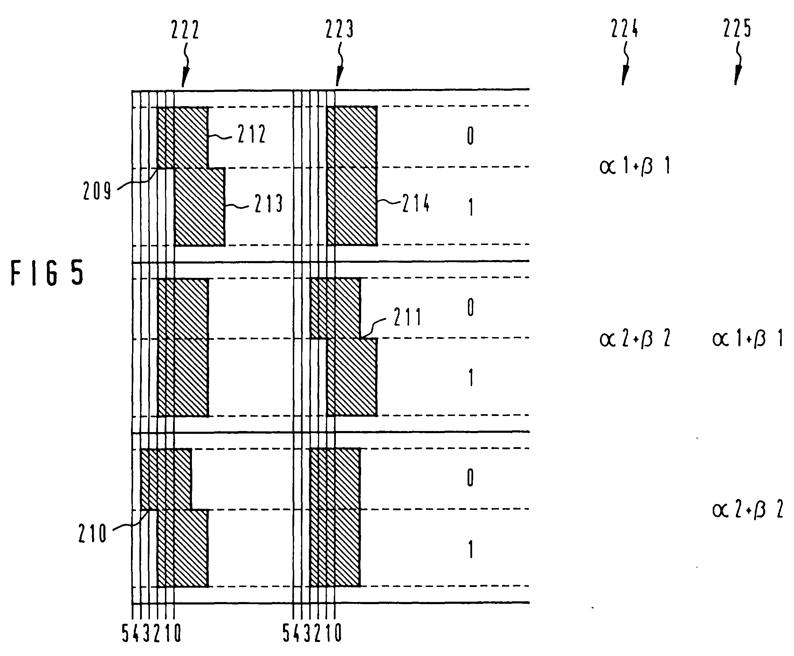

Die bisher in Zusammenhang mit dem Wiedergaberaster aßaß beschriebene Erfindung ist auch, wie in den Figuren 4 und 5 beschrieben, bei progressivem Wiedergaberaster α+β anwendbar. Die Schreib- und Lesezeigerdiagramme der Figur 4 zeigen eine beispielhafte Phasenbeziehung zwischen Einlese- und Auslesevorgang. Die Zeiger der Einleseadressen 200, 201 beziehen sich auf das Einlesen am Halbbildspeicher 22, der Zeiger 202 auf das Einlesen am Speicher 23. Da das α- und das β-Raster gleichzeitig dargestellt werden, liegen an den Halbbildspeichern 22, 23 parallele Auslesevorgänge vor. Dies ist durch die entsprechenden Auslesezeiger 203...208 dargestellt. Bei progressivem Wiedergaberaster liegt höchstens eine einzige Joint Line 209...211 vor. Es liegen also höchstens zwei durch eine Joint Line getrennte und am Bildschirm erkennbare Auslesebereiche 0, 1 vor.

In der Figur 5 ist die in den Halbbildspeichern 22, 23 enthaltene Bildinformation für einen von rechts nach links bewegten Gegenstand dargestellt. Die Spalte 222 entspricht dabei dem Inhalt des Halbbildspeichers 22, die Spalte 223 dem Inhalt des Halbbildspeichers 23. Die bei den Auslesevorgängen 203, 206 am Bildschirm im Raster α1+β1 darzustellende Bildinformation enthält die unterschiedlichen Halbbildanteile 212, 213, 214. Der Bildanteil 212 ist dabei der Bewegungsphase 2 zuordenbar, der Bildanteil 213 der Bewegungsphase 0, der Bildanteil 214 der Bewegungsphase 1. Wenn gemäß der vorgegebenen Bewegungsphasenabfolge bei diesem Raster α1+β1 die Bewegungsphase 1 darzustellen ist, weicht die Bewegungsphase der Bildanteile 212, 213 davon ab. Dies würde ohne weitere Maßnahmen zu einer Zähnchenstruktur führen. Für diese Bildanteile 212, 213 ist deshalb eine Bewegungsphasenumsetzung durch die Einrichtung 31 durchzuführen. Dies bedeutet, daß durch vorzugsweise eine Medianfilterung, der die beiden in den Halbbildspeicher 22, 23 enthaltenen Bildaten zugeführt werden, die Bildabschnitte 212, 213 in die Bewegungsphase 1 umgesetzt werden. Hierzu wird von der Steuerungseinrichtung 32 das entsprechende Umschaltsignal erzeugt. Vorzugsweise wird in den beiden durch die Joint Line getrennten Bereichen 0, 1 die gleiche Bewegungsphase dargestellt. Es wäre aber auch denkbar, daß für die Bereiche 0, 1 eine unterschiedliche Bewegungsphase dargestellt wird, derart, daß in jedem einzelnen Bereich 0, 1 eine kontinuierliche Abfolge der Bewegungsphasen entsteht und keine Bewegungsphase ausgeschlossen wird. In keinem der Bereiche soll dabei ein Bewegungsphasenrücksprung auftreten. Die Bewegungsphasenfolge wird dabei so gewählt, daß in jedem Halbbild eines Vollbildes die gleiche Bewegungsphase dargestellt wird. Außerdem wird eine Bewegungsphase unmittelbar zweimal hintereinander dargestellt wird. Die vorgegebene Bewegungsphasenfolge hängt darüber hinaus von der Phasenbeziehung zwischen dem Hauptbildraster und dem einzublendenden Bild ab. Bei progressiver Wiedergabe sind, wie in Figur 5 dargestellt, nur zwei Phasenbeziehungen 224, 225 (Phase 0, Phase 1) möglich. Das diese Phasenbeziehung angebende Signal kann in der Steuerungseinrichtung 32 dadurch erzeugt werden, daß das von der Einrichtung 25 erzeugte Halbbildsignal für das einzublendende Bild beim Start der Einblendung abgetastet wird.

In der Tabelle 2 ist zusammenfassend die von der Einrichtung 31 auszuführende Entscheidungsfunktion in Abhängigkeit von der Phasenlage, des Wiedergaberasters und des Auslesebereichs angegeben. Es ist dabei nur diejenige optimierte darzustellende Bewegungsphasenfolge angegeben, bei der in einem Vollbild für beide Bereiche die gleiche Bewegungsphase dargestellt wird. Die Tabelle gibt an, welche Bewegungsphase im jeweiligen Speicher 22, 23 gespeichert ist, und welche Bewegungsphasenfolge eingeblendet wird. Für die unterstrichen dargestellte Bewegungsphase ist eine Bewegungsphasenumsetzung durch die Einrichtung 31 durchzuführen.

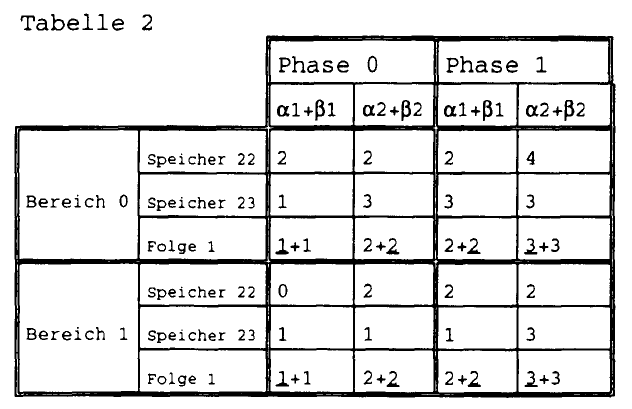

Zusammenfassend weist das beschriebene erfindungsgemäße Verfahren und die Schaltungsanordnung den Vorteil auf, daß eine hohe Qualität der Darstellung des einzublendenden Bildes erreicht wird, wobei eine Joint Line zwar nicht immer vollkommen unterdrückt werden kann, aber die vertikale Auflösung beibehalten wird. Die zur Durchführung des Verfahrens notwendigen Einrichtungen 30, 31, 32 können mit geringem Aufwand als Logikschaltungen integriert werden.

## Patentansprüche

1. Verfahren zur Einblendung eines einzublendenden Bildes in ein Hauptbild mit den Merkmalen:
- das einzublendende Bild umfaßt eine Folge von ersten und zweiten Halbbildern mit Zeilensprung und jedes Halbbild ist einer Bewegungsphase zuordenbar,
- das Hauptbild weist eine Folge von ersten und zweiten Zeilenrastern (α, β) mit Zeilensprung für die Einblendung des einzublendenden Bildes mit verdoppelter Zeilenfrequenz auf,
- die ersten Halbbilder des einzublendenden Bildes werden jeweils in einen ersten Halbbildspeicher (22) und die zweiten Halbbilder des einzublendenden Bildes werden jeweils in einen zweiten Halbbildspeicher (23) eingelesen,
- zur Einblendung wird abwechselnd aus dem ersten bzw. dem zweiten Halbbildspeicher mit verdoppelter Zeilenfrequenz ausgelesen,
**dadurch gekennzeichnet**, daß das Bild, abhängig von der Phasenlage zwischen dem Hauptbild und dem einzublendenden Bild und durch überholen des Einlesevorgangs durch den Auslesevorgang, in bis zu drei
- Abschnitte unterteilt wird, und eine Folge von horizontalen Bewegungsphasen ohne Bewegungsphasenrücksprung vorgegeben ist, die in der Folge der Zeilenraster darzustellen sind,
- bei Abweichung der Bewegungsphase eines gerade aus dem jeweiligen Halbbildspeicher ausgelesenen Teils eines Halbbildes von der vorgegebenen Bewegungsphase des jeweiligen Abschnitts eine Umsetzung dieses Teils des Halbbildes in die vorgegebene Bewegungsphase durchgeführt wird.

2. Verfahren nach Anspruch 1,
**dadurch gekennzeichnet**, daß
eine Korrekturtabelle vorgesehen ist, durch die in Abhängigkeit von der Phasenlage der Folge der einzublendenden Halbbilder in bezug auf die Folge der Zeilenraster des Hauptbildes, in Abhängigkeit vom Zeilenraster des Hauptbildes und in Abhängigkeit von der relativen Lage des ausgelesenen Bildteils im darzustellenden Bild ein Korrektursignal, durch das die Bewegungsphasenumsetztung aktivierbar ist, erzeugt wird, so daß die umgesetzte Bewegungsphase der vorgegebenen Bewegungsphase entspricht.

3. Verfahren nach Anspruch 1 oder 2,
**dadurch gekennzeichnet**, daß
die Folge der Zeilenraster des Hauptbildes abwechselnd das erste und das zweite Zeilenraster (aßaß) umfaßt und daß bei der vorgegebenen Folge der Bewegungsphasen jeweils zwei gleiche Bewegungsphasen unmittelbar aufeinander folgen.

4. Verfahren nach Anspruch 1 oder 2,
**dadurch gekennzeichnet**, daß
die Folge der Zeilenraster des Hauptbildes das erste und das zweite Zeilenraster gleichzeitig (α+β) umfaßt und daß die in den jeweiligen gleichzeitigen Zeilenrastern darzustellenden Bewegungsphasen zwei gleiche Bewegungsphasen sind.

5. Verfahren nach einem der Ansprüche 1 bis 4,
**dadurch gekennzeichnet**, daß
ein Auslesebereich, der von der relativen Lage der Ausleseadresse zu derjenigen Adresse abhängt, an der sich die Einleseadresse und die Ausleseadresse an einem der Halbbildspeicher überholen, festgestellt wird, und daß für jeden Bereich eine Folge von Bewegungsphasen ohne Bewegungsphasenrücksprung vorgegeben ist.

6. Verfahren nach einem der Ansprüche 1 bis 4,
**dadurch gekennzeichnet**, daß
daß für die Einblendung in das erste Zeilenraster aus dem ersten Halbbildspeicher (22) und für die Einblendung in das zweite Zeilenraster aus dem zweiten Halbbildspeicher (23) ausgelesen wird, sofern kein Überholen von Einschreiben und Auslesen am jeweiligen Halbbildspeicher auftritt, und das Auslesen aus beiden Halbbildspeichern mit der Bewegungsphasenumsetzung (31) durchgeführt wird, sofern ein Überholen auftritt.

7. Verfahren nach einem der Ansprüche 1 bis 6,
**dadurch gekennzeichnet**, daß
zur Bewegungsphasenumsetzung eine Medianfilterung durchgeführt wird, der eingangsseitig Bildpunkte aus beiden Halbbildspeichern zugeführt werden.

8. Schaltungsanordnung zur Durchführung des Verfahrens nach einem der Ansprüche 1 bis 7,
**gekennzeichnet durch**
Mittel zur Durchführung der Verfahrensschritte nach einem der Ansprüche 1 bis 7.

9. Schaltungsanordnung nach Anspruch 8,
**dadurch gekennzeichnet**, daß
- ein erster und ein zweiter Halbbildspeicher (22, 23) vorgesehen sind, die eingangsseitig mit einem Eingang für ein Videosignal (Q1) für das einzublendende Bild verbunden sind,
- eine Einrichtung (25) zur Halbbilderkennung des einzublendenden Bildes vorgesehen ist,
- eine Einrichtung (33) zur Zeilenrastererkennung des Hauptbildes vorgesehen ist,
- eine Einrichtung (31) zur Bewegungsphasenumsetzung vorgesehen ist, die eingangsseitig mit Ausgängen der beiden Halbbildspeicher verbunden ist,
- eine Umschalteinrichtung (30) vorgesehen ist, die in Abhängigkeit von einem Umschaltsignal mit einem der Ausgänge der beiden Halbbildspeicher oder dem Ausgang der Bewegungsphasenumsetzungseinrichtung verbindbar ist,
- eine Einblendeinrichtung (14) vorgesehen ist, durch die das am Ausgang der Umschalteinrichtung anliegende Bild in das Hauptbild einblendbar ist,
- eine Steuerungseinrichtung (32) vorgesehen ist, der die jeweiligen Ausgangssignale der Einrichtungen zur Halbbilderkennung und der Rastererkennung und die Lese- und Schreibadresse des gerade ausgelesenen Halbbildspeichers zugeführt werden,
- und daß durch die Steuerungseinrichtung (32) das Umschaltsignal derart erzeugt wird, daß bei Abweichung der Bewegungsphase eines gerade aus dem jeweiligen Halbbildspeicher ausgelesenen Halbbildes von einer in einer Korrekturtabelle der Steuerungseinrichtung vorgegebenen Bewegungsphase der Eingang der Umschalteinrichtung mit dem Ausgang der Einrichtung zur Bewegungsphasenumsetzung verbunden wird und daß ansonsten der Eingang der Umschalteinrichtung abwechselnd mit den Ausgängen der Halbbildspeicher verbunden wird.

## Claims

1. Method for inserting a picture to be inserted into a main picture, having the features:
- the picture to be inserted comprises a sequence of first and second fields with line interlacing, and each field can be allocated to a movement phase,
- the main picture has a sequence of first and second line rasters (α, β) with line interlacing for inserting the picture to be inserted at twice the line frequency,
- the first fields of the picture to be inserted are each read into a first field buffer (22) and the second fields of the picture to be inserted are each read into a second field buffer (23),
- for the purpose of insertion, fields are read alternately from the first and second field buffers at twice the line frequency,
characterized in that
- depending on the phase angle between the main picture and the picture to be inserted, and as a result of the reading-in operation being overtaken by the reading-out operation, the picture is subdivided into up to three sections, and a sequence of horizontal movement phases which have no backward jump in the movement phase and which are to be displayed in the sequence of the line rasters is predefined,
- if there is a difference between the movement phase of a part of a field just read out of the respective field buffer and the predefined movement phase of the respective section, this part of the field is converted into the predefined movement phase.

2. Method according to Claim 1, characterized in that a correction table is provided, by means of which, depending on the phase angle of the sequence of fields to be inserted in relation to the sequence of line rasters of the main picture, depending on the line raster of the main picture and depending on the relative position of the part of the image read out in the picture to be displayed, a correction signal is generated by means of which the movement-phase conversion can be activated, so that the converted movement phase corresponds to the predefined movement phase.

3. Method according to Claim 1 or 2, characterized in that the sequence of line rasters of the main picture alternately comprises the first and the second line raster (αβαβ) and in that in the predefined sequence of movement phases, in each case two identical movement phases follow one another directly.

4. Method according to Claim 1 or 2, characterized in that the sequence of line rasters of the main picture simultaneously comprises the first and the second line raster (α+β), and in that the movement phases to be displayed in the respective simultaneous line rasters are two identical movement phases.

5. Method according to one of Claims 1 to 4, characterized in that a read-out range is defined which depends on the position of the read-out address relative to that address at which the read-in address and the read-out address on one of the field buffers overtake each other, and in that a sequence of movement phases with no backward jump in the movement phase is predefined for each range.

6. Method according to one of Claims 1 to 4, characterized in that a read from the first field buffer (22) is made for the insertion into the first line raster, and a read is made from the second field buffer (23) for the insertion into the second line raster, provided no overtaking of write-in and read-out occurs on the respective field buffer, and the read-out is made from both field buffers with the movement-phase conversion (31), provided that overtaking occurs.

7. Method according to one of Claims 1 to 6, characterized in that for the purpose of movement-phase conversion, median filtering is carried out, to which pixels from both field buffers are fed on the input side.

8. Circuit arrangement for implementing the method according to one of Claims 1 to 7, characterized by means for implementing the method steps according to one of Claims 1 to 7.

9. Circuit arrangement according to Claim 8, characterized in that
- a first and a second field buffer (22, 23) are provided, whose inputs are connected to an input for a video signal (Q1) for the picture to be inserted,
- a device (25) is provided for field detection of the picture to be inserted,
- a device (33) is provided for line-raster detection of the main picture,
- a device (31) is provided for movement-phase conversion, whose input is connected to the outputs of the two field buffers,
- a changeover device (30) is provided which, depending on a changeover signal, can be connected to one of the outputs from the two field buffers or to the output from the movement-phase conversion device,
- an insertion device (14) is provided, by means of which the picture present at the output of the changeover device can be inserted into the main picture,
- a control device (32) is provided, to which the respective output signals from the devices for field detection and raster detection and the read and write addresses of the field buffer just read out are fed,
- and in that the changeover signal is generated by the control device (32) in such a way that if there is a difference between the movement phase of a field just read out of the respective field buffer and a movement phase predefined in a correction table of the control device, the input of the changeover device is connected to the output of the device for movement-phase conversion, and in that otherwise the input of the changeover device is alternately connected to the outputs of the field buffers.

## Revendications

1. Procédé d'insertion d'une image à insérer dans une image principale présentant les caractéristiques suivantes:
- l'image à insérer comprend une séquence de premières et deuxièmes trames avec saut de ligne et chaque trame peut être assignée à une phase de mouvement,
- l'image principale présente une séquence de premières et deuxièmes trames de lignes (α, β) avec saut de ligne pour l'insertion de l'image à insérer avec une fréquence de ligne doublée,
- les premières trames de l'image à insérer sont à chaque fois enregistrées dans une première mémoire de trame (22) et les deuxièmes trames de l'image à insérer sont à chaque fois enregistrées dans une seconde mémoire de trames (23),
- pour l'insertion, la lecture se fait alternativement à partir de la première et de la deuxième mémoire de trames avec une fréquence de ligne doublée,
- caractérisé en ce que l'image, en fonction de la position de phase entre l'image principale et l'image à insérer et par le dépassement de l'opération d'enregistrement par l'opération de lecture, est divisée jusqu'à 3 sections et une séquence de phases de mouvement horizontales sans retour en arrière de mouvement est prédéfinie, qui doivent être représentées dans la séquence des trames de lignes,
- en cas de divergence de la phase de mouvement d'une partie d'une trame de la phase de mouvement prédéfinie de la section respective qui vient juste d'être extraite de la mémoire de trame respective, une conversion de cette partie de la trame est effectuée dans la phase de mouvement prédéfinie.

2. Procédé selon la revendication 1,
caractérisé en ce qu'une table de correction est prévue par laquelle, en fonction de la position de phase de la séquence des trames à insérer en rapport avec la séquence de trames de lignes de l'image principale, en fonction de la trame de lignes de l'image principale et en fonction de la position relative de la partie d'image lue dans l'image à représenter, un signal de correction, par lequel la conversion de la phase de mouvement est activable, est produit de façon à ce que la phase de mouvement convertie corresponde à la phase de mouvement prédéfinie.

3. Procédé selon la revendication 1 ou 2,
caractérisé en ce que la séquence de trames de lignes de l'image principale comprend en alternance la première et la deuxième trame de lignes (αβαβ) et en ce que avec la séquence prédéfinie des phases de mouvement, à chaque fois deux phases de mouvement identiques se succèdent directement.

4. Procédé selon la revendication 1 ou 2,
caractérisé en ce que la séquence de trames de lignes de l'image principale comprend simultanément la première et la deuxième trame de lignes (α+β) et en ce que les phases de mouvement à représenter dans les trames de lignes simultanées respectives sont deux phases de mouvement identiques.

5. Procédé selon l'une des revendications 1 à 4,
caractérisé en ce qu'une zone d'extraction est constatée, qui dépend de la position relative de l'adresse d'extraction par rapport à l'adresse à laquelle l'adresse d'enregistrement et l'adresse d'extraction se dépassent dans une des mémoires de trames, et que pour chaque zone une séquence de phases de mouvement sans retour en arrière de phase de mouvement est prédéfinie.

6. Procédé selon l'une des revendications 1 à 4,
caractérisé en ce que pour l'insertion dans la première trame de lignes, une lecture s'effectue à partir de la première mémoire de trames (22) et pour l'insertion dans la deuxième trame de lignes à partir de la deuxième mémoire de trames (23), dans la mesure où aucun dépassement d'inscription et d'extraction n'apparaît au niveau de la mémoire de trame respective et l'extraction des deux mémoires de trames s'effectue avec la conversion de phase de mouvement (31) dans la mesure où un dépassement se produit.

7. Procédé selon l'une des revendications 1 à 6,
caractérisé en ce qu'un filtrage médian est effectué pour la conversion de mouvement de phase auquel des pixels sont amenés côté entrée à partir des deux mémoires de trames.

8. Circuit pour l'exécution du procédé selon l'une des revendications 1 à 7,
caractérisé par des moyens pour réaliser les étapes du procédé selon les revendications 1 à 7.

9. Circuit selon la revendication 8,
caractérisé en ce que
- une première et une seconde mémoire de trame (22,23) sont prévues, dont les entrées sont reliées à une entrée pour un signal vidéo (Q1) pour l'image à insérer,
- un dispositif (25) est prévu pour la reconnaissance de la trame de l'image à insérer,
- un dispositif (33) est prévu pour la reconnaissance de trame de lignes de l'image principale,
- un dispositif (31) est prévu pour la conversion de phases de mouvement, qui est reliée à son entrée aux sorties des deux mémoires de trames,
- un dispositif de commutation (30) est prévu, qui peut être relié en fonction d'un signal de commutation à une des sorties des deux mémoires de trames ou à la sortie du dispositif de conversion des phases de mouvement,
- un dispositif d'insertion (14) est prévu, par lequel l'image se trouvant à la sortie du dispositif de commutation est insérable dans l'image principale,
- un dispositif de commande (32) est prévu, qui reçoit les signaux de sortie des dispositifs de reconnaissance de trame et de la reconnaissance de trame ainsi que l'adresse de lecture et d'écriture de la mémoire de trame qui vient juste d'être lue,
- et en ce que le signal de commutation est produit par le dispositif de commande (32) de manière à ce que l'entrée du dispositif de conversion est reliée à la sortie du dispositif de conversion de phase de mouvement au cas où la phase de mouvement d'une trame qui vient juste d'être extraite de la mémoire de trame diffère de l'une des phases de mouvement prédéfinie dans un tableau de correction du dispositif de commande et en ce que l'entrée du dispositif de commutation est sinon reliée alternativement aux sorties des mémoires de trame.
